# NEUE EUROPÄISCHE PATENTSCHRIFT

(11) **EP 2 766 652 B2**
(45) Veröffentlichungstag und Bekanntmachung des Hinweises auf die Entscheidung über den Einspruch: **02.08.2023**
(45) Hinweis auf die Patenterteilung: 31.05.2017
(21) Anmeldenummer: 12783510.6
(22) Anmeldetag: 12.10.2012
(51) Int. Cl.: F16L 53/00, F16L 25/01, F01N 3/20

(54) **BEHEIZBARE MEDIENLEITUNG MIT ZUMINDEST EINER MEDIENLEITUNG MIT ZWEI LEITUNGSVERBINDERN**
HEATABLE MEDIA LINE HAVING AT LEAST ONE MEDIA LINE WITH TWO LINE CONNECTORS
CONDUITE DE FLUIDE POUVANT ÊTRE CHAUFFÉE COMPRENANT AU MOINS UNE CONDUITE DE FLUIDE PRÉSENTANT DEUX RACCORDS DE CONDUITE

(30) Priorität: 14.10.2011 DE 202011106751 U; 07.12.2011 DE 102011120358
(43) Veröffentlichungstag der Anmeldung: 20.08.2014
(73) Patentinhaber: Voss Automotive GmbH, 51688 Wipperfürth (DE)
(72) Erfinder: ETSCHEID, Tobias, 51789 Lindlar (DE); SCHWARZKOPF, Otfried, 51515 Kürten (DE)
(74) Vertreter: Rebbereh, Cornelia
(86) Internationale Anmeldenummer: PCT/EP2012/004281
(87) Internationale Veröffentlichungsnummer: WO 2013/053492

(56) Entgegenhaltungen:
- EP-A1- 2 816 272
- WO-A1-2007/073286
- WO-A1-2008/131993
- WO-A1-2011/085154
- WO-A2-2010/063629
- DE-T5-112008 003 310
- US-A1- 2005 083 638

## Beschreibung

Die Erfindung betrifft eine beheizbare Medienleitung mit zumindest einer Medienleitung mit zwei Leitungsverbindern und zwei oder drei elektrischen Heizlitzen. Konfektionierte Medienleitungen mit zumindest einer Medienleitung, die beheizbar ist, und zumindest teilweise beheizbaren Leitungsverbindern sind im Stand der Technik bekannt. Insbesondere in Fahrzeugen sind Medienleitungen zum Leiten von zumindest flüssigen Medien vorgesehen. Bei niedrigen Temperaturen drohen die Medienleitungen einzufrieren, weshalb eine Beheizung vorgesehen wird. Leitungsverbinder dienen zum Verbinden von zumindest zwei Medienleitungen oder zur Anschlussverbindung einer Medienleitung mit einem beliebigen Aggregat. Durch die Medienleitungen werden oftmals solche Medien geführt, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei Wasserleitungen für Scheibenwaschanlagen der Fall, ebenso wie bei Medienleitungen, mittels derer wässrige Harnstofflösung als Medium transportiert wird, die als NOx-Reaktionsadditiv für Dieselmotoren mit sogenannten SCR-Katalysatoren eingesetzt werden.

Die beiden Anschlussenden der konfektionierten beheizbaren Medienleitung sind üblicherweise durch zwei endseitig an der Medienleitung angebrachte Leitungsverbinder gebildet. Die Heizelemente dienen dem Beheizen der Medienleitung und/oder der Anschlussenden bzw. Leitungsverbinder. Zu diesem Zweck können sie innen- und/oder außenseitig an der Medienleitung und den Anschlussenden bzw. Leitungsverbindern angeordnet werden. Die Heizelemente können elektrisch in Reihe geschaltet und mit einer gemeinsamen Strom- bzw. Spannungsquelle verbunden werden.

Aus der WO2010/063629 ist es ferner bekannt, die Heizelemente elektrisch parallel zu betreiben und jedes Heizelement separat mit einem zur Einstellung seiner Heizleistung gesteuerten bzw. geregelten Betriebsstrom zu versorgen. Hierbei wird jedes Heizelement separat mit einer eigenen Betriebsspannung versorgt, wobei jede Betriebsspannung aus einer Versorgungsspannung durch eine zur Regelung der Heizleistung mit einem bestimmten Tastverhältnis getakteten Pulsweitenmodulationssteuerung erzeugt wird. Der sich ergebende Betriebsstrom eines jeden Heizelementes ergibt sich aus dem Effektivwert der getakteten, gepulsten Betriebsspannung und einem jeweils aktuellen, temperaturabhängigen Widerstand des Heizelementes.

Aus der WO2008/131993 A1 ist ferner das Vorsehen einer elektrischen Reihenschaltung ebenso wie einer Parallelschaltung der Heizdrähte der konfektionierten Medienleitung bekannt. Ferner offenbart diese Druckschrift des Standes der Technik, dass der Heizdraht eines der Leitungsverbinder jeweils mit einer der Drahtwicklungen der Rohrleitung elektrisch in Reihe geschaltet ist und die Anschlussenden der beiden Reihenschaltungen an jeweils einem der beiden Leitungsverbinder nach außen geführt sind zum Anschluss einer Spannungsversorgung und/oder zur Weiterverbindung. Der Heizleiter kann entlang der Rohrleitung so angeordnet werden, dass sein elektrischer Widerstand abschnittsweise unterschiedlich ist, so dass abschnittsweise unterschiedliche Heizleistungen erzeugt werden.

Bei diesen konfektionierten Medienleitungen des Standes der Technik können somit jeweils einzelne Heizelemente oder Heizdrähte miteinander in Reihe und/oder parallel verschaltet werden. Ferner ist es gemäß der WO2010/063629 A2 möglich, die einzelnen Heizelemente getrennt voneinander mit elektrischer Energie zu versorgen und hierüber die jeweils erforderliche Heizleistung einzustellen. In der Anwendung derartiger beheizbarer Medienleitungen ergibt sich häufig das Problem, dass an den beiden Anschlussenden der Medienleitung, insbesondere den beiden Leitungsverbindern, ein unterschiedlicher Wärmebedarf besteht.

Aus der WO 2007/073286 A1 ist eine mit endseitigen Anschlussverbindern versehene Leitung für ein Fahrzeug mit einem ersten Kabel zum Beheizen der Fluidleitung und zumindest einem elektrischen Verbinder zum Verbinden des Kabels mit einer elektrischen Energiequelle bekannt. Der Leitungsverbinder ist mit einer elektrisch beheizbaren Einrichtung versehen, die angeordnet ist, um zumindest einen Teil des Leitungsverbinders zu beheizen. Das erste Kabel zum Beheizen der Fluidleitung und der elektrisch beheizten Einrichtung sind über denselben elektrischen Verbinder mit der elektrischen Energieversorgung verbunden.

Die US 2005/083638 A1 offenbart eine Widerstandsfolie auf einer Aluminiumleitung. Ein Steuerkreis, enthaltend einen Widerstand, steuert den Betrieb einer oder mehrerer Fahrzeugkomponenten. Eine Widerstandsmatrix ist Teil einer zweiten Leitungsanordnung. Für die Widerstandsmatrix ist offenbart, dass eine erste Zone einen Widerstand von 660 mΩ und eine zweite Zone einen Widerstand von 230 mΩ aufweist.

Aus der WO 2011/085154 A1 geht eine elektrisch beheizbare Leitungsanordnung mit einer Leitung und einem ersten und einem zweiten Leitungsverbinder hervor. Die Leitung ist mit einem Paar von spiralförmig um diese herum gewundenen Drähten und einer Umhüllung um die Leitung herum versehen. Ein erstes Ende eines jeden Leitungsverbinders liegt innerhalb eines entsprechenden Endes der Leitung, wobei jeweils ein zweites Ende des Leitungsverbinders über das Leitungsende hinausragt. Die Drähte sind um zumindest einen Teil des zweiten Leitungsverbinderendes herum gewunden. Durch Ändern der größeren Länge der Leitung, von der die endgültige Länge der Leitung abgetrennt wird, kann die erhaltene Drahtlänge variiert werden, um mehr oder weniger Windungen über dem Leitungsverbinderkörper vorsehen zu können. Hierdurch oder durch Kürzen der Drähte soll der Wärmeeintrag in den Leitungsverbinder gegenüber dem in die Leitung gesteuert werden, ohne separate beheizte Leitungsverbinder unterschiedlicher elektrischer Leistung vorsehen zu müssen.

Die DE 11 2008 003 310 T5 offenbart eine Heizrohrleitung für den Transport von Fluid, wobei die Rohrleitung aus einem Rohr und zumindest einem Anschlussstück besteht, das an einem Ende des Rohres platziert ist. Einerseits weist sie Mittel zur elektrischen Widerstandsbeheizung, die sich über die Länge des Rohres erstrecken, auf, die andererseits, von denselben Verbindungsmitteln mit Energie versorgt werden wie die vorstehenden Mittel zur Beheizung, ferner Mittel zur Übertragung einer Heizleistung durch Wärmeleitung in Richtung des Bereichs des Anschlussstücks oder der Anschlussstücke. In dem Endbereich des Rohres ist eine metallische Muffe vorgesehen, die eine Wärmeleitung sicherstellt und somit eine Übertragung von Wärme in eine axiale Richtung in Richtung des Inneren des Anschlussstücks der Leitung. Die Wärmeleitung der Muffe verhindert in Kombination mit der isolierenden Wirkung einer Aufformung kalte Stellen im Bereich des Anschlussstücks. Die Rohrleitung wird sowohl über die Länge des Rohres als auch in dem Bereich des Anschlussstücks beheizt.

Der vorliegenden Erfindung liegt daher die Aufgabe zugrunde, eine beheizbare Medienleitung der eingangs genannten Art dahingehend fortzubilden, dass je nach Anwendungsfall ein unterschiedlicher Wärmebedarf an den Leitungsverbindern der Medienleitung gedeckt werden kann. Die Aufgabe wird für eine beheizbare Medienleitung durch die Merkmale des Anspruchs 1. Weiterbildungen der Erfindung sind in den abhängigen Ansprüchen definiert.

Dadurch wird, im Unterschied zum Stand der Technik insbesondere der WO 2010/063629 A2, nicht die Heizleistung eines jeden einzelnen Heizelementes gesteuert, sondern auf einfachere Art und Weise ein differenzierter Wärmeeintrag und/oder -austrag an den Anschlussenden der Medienleitung vorgesehen. Unter einem Wärmeaustrag wird hier der Eintrag oder Übergang von Wärme in das durch die Medienleitung mit dem zumindest einen endseitigen Leitungsverbinder strömende Medium an diese angeschlossene Aggregate und/oder Komponenten verstanden. Der Wärmeübergang erfolgt üblicherweise durch Wärmeleitung. Besteht beispielsweise ein unterschiedlicher Wärmebedarf an den beiden Anschlussenden der Medienleitung durch unterschiedliche Umgebungstemperaturen, wodurch sich aus der Applikation ein wärmeres oder warmes Ende und ein im Vergleich dazu kälteres oder kaltes Ende ergibt, wobei beispielsweise das kalte Ende in Richtung eines Tanks und das warme Ende in Richtung einer Dosierstelle einer Einspritzeinrichtung, also abgasstrangnah bzw. motornah, bei einem Fahrzeug angeordnet ist, wird als Mittel eine unterschiedliche Leistungseinkopplung an den beiden Anschlussenden der Medienleitung vorgesehen. Im heißen oder wärmeren Bereich der beheizbaren Medienleitung reicht die dort vorhandene Wärmestrahlung häufig bereits zum Erwärmen des durch die beheizbare Medienleitung strömenden Mediums aus, also insbesondere zum Auftauen desselben bei niedrigen Umgebungstemperaturen außerhalb eines Fahrzeugs. Erfindungsgemäß ist eine unterschiedliche Anordnung der Heizlitzen an den beiden Leitungsverbindern vorgesehen. Insbesondere kann eine unterschiedliche Anzahl von Wicklungen der Heizlitzen an den beiden. Leitungsverbindern vorgesehen sein.

Die Heizelemente weisen in Bereichen der beiden Anschlussenden einen unterschiedlichen Widerstand auf. Ein unterschiedlicher Wärmebedarf an den beiden Anschlussenden der Medienleitung kann somit durch unterschiedliche Leistungseinkopplung an den Anschlussenden gedeckt werden. Beispielsweise liegt an dem einen Anschlussende ein Heißbereich (wie vorstehend erwähnt, z.B. an einer motor- bzw. abgasstrangnahen Dosierstelle) vor, wobei ein Heizelement mit einem niedrigeren Widerstand als an dem anderen Anschlussende verwendet wird, das als Kaltbereich (wie vorstehend erwähnt, z.B. im Bereich eines Tanks) ausgebildet und mit einem vergleichsweise hohen Widerstand des zweiten Heizelements versehen sein kann. Anschlussende kann hier ein Leitungsverbinder, insbesondere QC (Quick Connector) sein.

An dem einen Anschlussende bzw. Leitungsverbinder ist kein zusätzliches Heizelement vorgesehen, sondern werden die Heizelemente bzw. Heizlitzen, die sich entlang der Medienleitung erstrecken, zum Beheizen dieses Anschlussendes verwendet. Das andere Anschlussende der Medienleitung wird durch das dritte Heizelement beheizt. Eine solche Anordnung eignet sich insbesondere bei Vorsehen unterschiedlicher thermischer Massen an den beiden Anschlussenden, wobei beispielsweise ein Aggregat an dem einen Anschlussende eine hohe thermische Masse aufweist.

Dies kann also bei der Ausgestaltung der beheizbaren Medienleitung durch Variation der Anzahl an Heizelementen und deren Anordnung an den Anschlussenden berücksichtigt werden. An einer motor- oder abgasstrangnahen Dosierseite einer Einspritzeinrichtung ist aufgrund der dort vorhandenen Wärme kein Heizelement zum Beheizen des Leitungsverbinders und ggf. sogar eines Teils der Medienleitung erforderlich, am tankseitigen Ende der beheizbaren Medienleitung wird der dort vorhandene Leitungsverbinder jedoch beheizt, da von außen keine Wärme vom Tank in diesen eingekoppelt wird.

Ferner können zwei Heizelemente vorgesehen sein, wobei eines oder beide Heizelemente an oder auf nur einem Anschlussende, insbesondere Leitungsverbinder, angeordnet ist/sind. Hierbei sind also lediglich zwei Heizelemente vorgesehen und es wird nur eines der beiden Anschlussenden beheizt, während auf oder an dem anderen Anschlussende kein Heizelement zum Beheizen angeordnet wird.

Als weiter vorteilhaft erweist es sich, drei Heizelemente vorzusehen, wobei nur an oder auf einem Anschlussende, insbesondere Leitungsverbinder, zumindest eines der Heizelemente angeordnet ist. Es wird also nur ein Anschlussende beheizt.

Als weiter vorteilhaft erweist es sich, wenn die beiden Anschlussenden, insbesondere Leitungsverbinder, unterschiedlich thermisch leitfähig ausgebildet sind. An einem Anschlussende kann, um dieses leitfähiger als das andere auszubilden, beispielsweise ein Metall und/oder leitfähiger Kunststoff als Material verwendet werden, während das andere Anschlussende, das im Vergleich zu dem ersten weniger leitfähig ist, beispielsweise aus einem Standard-Kunststoff, wie PE, besteht, der kaum leitfähig ist. Hierdurch kann eine erhöhte thermische Belastbarkeit aufgrund unterschiedlicher Wärmeeinkopplung an den beiden Anschlussenden der Medienleitung, insbesondere den Leitungsverbindern der Medienleitung, hergestellt werden. Ferner kann ein Anschlussende als Kupplungsteil und das andere Anschlussende als Steckverbinder ausgebildet werden, beispielsweise für einen besseren Wärmeeintrag in eine angeschlossene Komponente. Aufgrund der unterschiedlichen thermischen Leitfähigkeit kann eine bessere Temperaturverteilung im Bereich der Leitungsverbinder und somit auch eine bessere Wärmeabfuhr zum Vermeiden der Entstehung von sogenannten Hotspots vorgesehen werden. Es kann somit gezielt an den Stellen eine Wärmeabfuhr erfolgen, an denen ansonsten eine erhöhte Temperatur auftritt.

Ferner ist es möglich, zum Gewährleisten eines Wärmeeintrags in eine angeschlossene Komponente, im Bereich des Leitungsverbinders bzw. Anschlussendes eine bessere Wärmeleitung vorzusehen, wobei unterschiedlich thermisch leitfähige Anschlussenden vorgesehen sind. Über diese unterschiedlichen Leitfähigkeiten der mit der Medienleitung verbundenen Anschlussenden bzw. Leitungsverbinder kann somit der Wärmeeintrag in eine angeschlossene Komponente gesteuert werden.

Um einen Wärmeeintrag in zumindest eines der Anschlussenden zu ermöglichen, kann vorteilhaft die Wärmeleitfähigkeit dieses Anschlussendes bzw. Leitungsverbinders verbessert werden. Es wird somit insbesondere ein wärmeleitfähiger Leitungsverbinder bzw. QC (Quick Connector) vorgesehen.

Die beheizbare Medienleitung kann zumindest zwei ineinander angeordnete Medienleitungen umfassen, wobei eine innere Medienleitung innenbeheizbar ist und in dem Zwischenraum zwischen der zumindest einen inneren Medienleitung und einer äußeren Medienleitung beheizbares Medium strömbar ist oder strömt. Die Medienleitung kann also aus mehreren ineinander angeordneten Medienleitungen bestehen, wobei zumindest eine von diesen durch Heizelemente beheizbar ist und zwischen zwei Medienleitungen zu beheizendes Medium strömen kann.

Als weiter vorteilhaft erweist es sich, zur unterschiedlichen Wärmeabfuhr an den Anschlussenden der Medienleitung Einrichtungen vorzusehen, die unterschiedlich Isolationseigenschaften aufweisen. Beispielsweise kann eine Isolation durch Vorsehen eines der Anschlussenden mit einer außenseitigen Isolationskappe und des anderen Anschlussendes ohne eine solche geschaffen werden. Auch andere Arten von Hüllen oder eine Hüllfunktion aufweisenden Einrichtung, die unterschiedliche Isolationseigenschaften aufweisen, können an den jeweiligen Anschlussenden vorgesehen werden, um hier eine unterschiedliche Wärmeabfuhr zu ermöglichen.

Zur näheren Erläuterung der Erfindung werden im Folgenden Ausführungsbeispiele von dieser näher anhand der Zeichnungen beschrieben. Diese zeigen Ihnen:
- Figur 1: eine Seitenansicht einer erfindungsgemäßen konfektionierten beheizbaren Medienleitung,
- Figur 2: eine Prinzipskizze einer nicht erfindungsgemäßen Verschaltungsanordnung von Heizelementen der beheizbaren Medienleitung gemäß Figur 1,
- Figur 3: eine Prinzipskizze einer Ausführungsform einer erfindungsgemäßen Verschaltungsanordnung von Heizelementen einer beheizbaren Medienleitung,
- Figur 4: eine Prinzipskizze einer Ausführungsform einer erfindungsgemäßen Verschaltungsanordnung für eine beheizbare Medienleitung,
- Figur 5: eine Prinzipskizze einer Ausführungsform einer erfindungsgemäßen Verschaltungsanordnung von Heizelementen einer beheizbaren Medienleitung,
- Figur 6: eine Prinzipskizze einer Ausführungsform einer erfindungsgemäßen Verschaltungsanordnung von Heizelementen einer beheizbaren Medienleitung,
- Figur 7: eine Prinzipskizze einer nicht erfindungsgemäßen Verschaltungsanordnung von Heizelementen einer beheizbaren Medienleitung,
- Figur 8: eine Prinzipskizze einer nicht erfindungsgemäßen Verschaltungsanordnung einer beheizbaren Medienleitung,
- Figur 9: eine Prinzipskizze einer nicht erfindungsgemäßen Verschaltungsanordnung von Heizelementen einer beheizbaren Medienleitung,
- Figur 10a und Figur 10b: Prinzipskizzen einer nicht erfindungsgemäßen Verschaltungsanordnung für eine beheizbare Medienleitung,
- Figur 11: eine Prinzipskizze eines SCR-Katalysatorsystems mit einer Ausführungsform einer erfindungsgemäßen beheizbaren Medienleitung,
- Figur 12: eine teilweise Schnittansicht durch einen Leitungsverbinder mit einer zweiteiligen Medienleitung und einer nicht erfindungsgemäßen Verschaltungsanordnung von Heizelementen, wobei eine innere und eine äußere Medienleitung ineinander angeordnet sind.

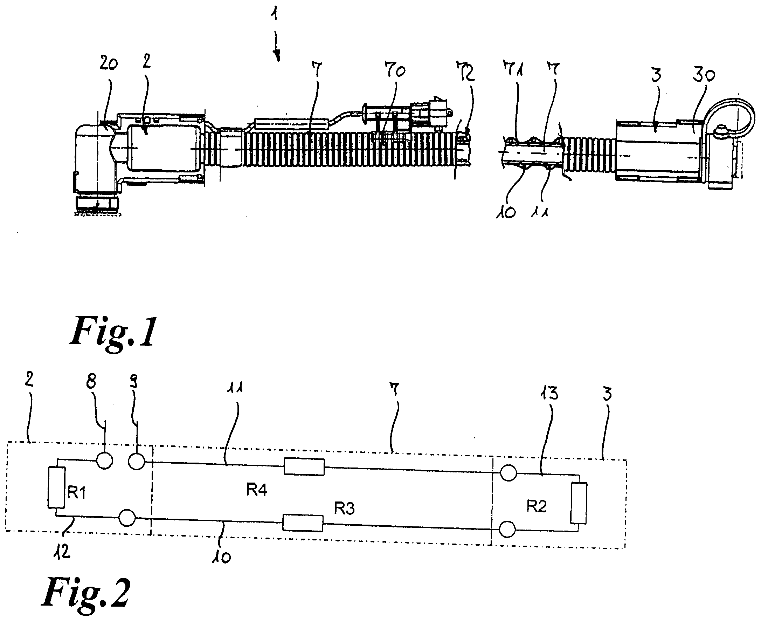

Figur 1 zeigt eine Seitenansicht einer beheizbaren Medienleitung 1 mit zwei Anschlussenden 2, 3 in Form von Leitungsverbindern. Die Leitungsverbinder 2, 3 sind jeweils zum Anschluss an unterschiedlichste Einrichtungen bzw. Aggregate ausgebildet. In dem in Figur 1 gezeigten Beispiel ist der Leitungsverbinder 2 als Winkelverbinder und der Leitungsverbinder 3 als gerader Leitungsverbinder ausgebildet. Dies kann jedoch auch umgekehrt sein bzw. es können auch beide Leitungsverbinder 2, 3 gerade oder gewinkelt ausgebildet sein.

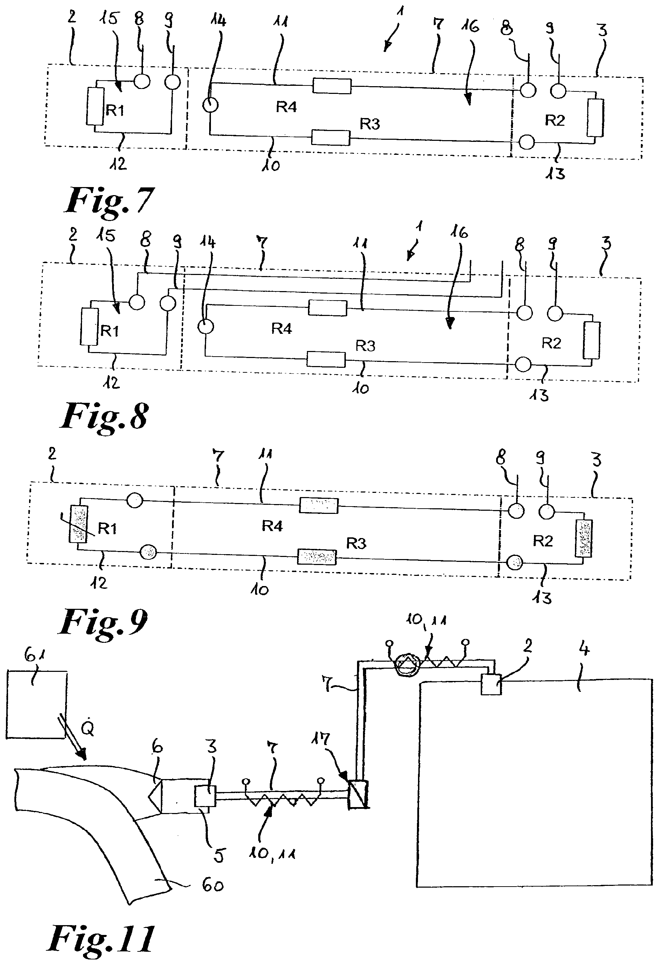

Beispielsweise können ein Tank 4 auf der einen Seite und ein Dosiermodul 5 an der anderen Seite der beheizbaren Medienleitung angeschlossen werden, wie Figur 11 entnommen werden kann. Im Bereich des Tanks 4 ist das erste Anschlussende 2 der beheizbaren Medienleitung 1 angekoppelt, während das zweite Anschlussende 3 mit dem Dosiermodul 5 verbunden ist, das seinerseits Teil einer Einspritzeinrichtung 6 ist. Diese ist nahe an einem Abgasstrang 60 sowie einem nur angedeuteten Motor 61 angeordnet. Die Wärmestrahlung in den Bereich der Einspritzeinrichtung 6 hinein ist durch Q angedeutet. In Figur 11 ist somit ein sogenanntes SCR-Katalysatorsystem eines Fahrzeug-Verbrennungsmotors gezeigt, wobei die beheizbare Medienleitung 1 die Verbindung zwischen dem Tank 4 und der Einspritzeinrichtung 6 darstellt. In Figur 11 sind zwischen dem Tank 4 und der Einspritzeinrichtung 6 bzw. dem Dosiermodul 5 zwei beheizbare Medienleitungen angeordnet, die in Reihe geschaltet sind. Dies wird häufig aus Montagegründen vorgesehen, wobei der Tank mit einer kurzen Leitung versehen eingebaut wird, da anderenfalls nach dem Einbau des Tanks dieser zum Anschließen einer Medienleitung nicht mehr zugänglich wäre. Die beiden beheizbaren Medienleitungen sind miteinander im Bereich der Verbindungs- bzw. Trennstelle 17 zu einer Leitung verbunden. Es kann alternativ jedoch auch lediglich eine beheizbare Medienleitung zwischen den beiden Leitungsverbindern 2, 3 angeordnet werden.

Im Betrieb ergeben sich aufgrund unterschiedlichster Umgebungstemperaturen oder Wärmestrahlung oder -leitung ein warmes und ein kaltes Ende bzw. ein warmer und ein kalter Bereich der beheizbaren Medienleitung, wobei das vergleichsweise kalte Ende im Bereich des Tanks 4 und das vergleichsweise warme Ende im Bereich des Dosiermoduls 5 angeordnet ist. Der motornähere Bereich wird als der warme oder wärmere Bereich/das warme oder wärmere Ende bezeichnet und alle anderen Bereiche/Enden als kalter Bereich/kaltes Ende. Es ergibt sich daraus ein unterschiedlicher Wärmebedarf an den beiden Enden der beheizbaren Medienleitung, jedenfalls nach einer gewissen Einschaltdauer, also im Bereich des ersten und des zweiten Anschlussendes 2, 3 der beheizbaren Medienleitung. Bis eine Betriebsbereitschaft vorliegt, sollte an das ohnehin wärmere Ende nicht zu viel Wärme eingekoppelt, also dieses weniger intensiv beheizt werden, wobei hier auch eine Zeitabhängigkeit vorliegt, also das eine Ende ggf. weniger lange beheizt werden muss als das andere. Um diesen unterschiedlichen Wärmebedarf zu decken, kann eine unterschiedliche Leistungseinkopplung der elektrischen Leistung in Watt an den beiden Anschlussenden 2, 3 der beheizbaren Medienleitung 1 vorgesehen werden. Dies stellt zusätzlich einen Schutz des Heißbereichs vor Überhitzen dar. Wenn beide Enden der beheizbaren Medienleitung der gleichen Regelstrategie unterliegen, kann hierüber also ein Überhitzungsschutz nach dem Auftauen und Erwärmen des Mediums geschaffen werden. Dies kann z. B. durch Variation der Anzahl von Wicklungenauf oder an den beiden Anschlussenden bzw. Leitungsverbindern 2, 3 vorgesehen werden.

Ferner ist es möglich, wie in Figur 2 gezeigt, unterschiedliche Heizlitzen auf oder an den beiden Anschlussenden 2, 3 zu verwenden. Bei der nicht erfindungsgemäßen Ausführungsform der beheizbaren Medienleitung gemäß Figur 2 sind vier Heizlitzen bzw. Heizelemente 10, 11, 12, 13 vorgesehen. Die Heizlitzen 10, 11 erstrecken sich dabei entlang der Medienleitung 7, während die Heizlitze 13 an oder auf dem zweiten Anschlussende 3 der beheizbaren Medienleitung 1 angeordnet ist und die Heizlitze 12 an oder auf dem ersten Anschlussende 2 der beheizbaren Medienleitung 1. Die Heizlitze 12 weist einen Widerstand R1 auf und die Heizlitze 13 einen Widerstand R2. Für den Fall, dass das Anschlussende 2 als Heißbereich ausgebildet ist, ist der Widerstand R1 der Heizlitze 12 kleiner als der Widerstand R2 der Heizlitze 13. Die Widerstände R3 und R4 der ersten und zweiten Heizlitze 10, 11 sind in dem Ausführungsbeispiel gemäß Figur 2 gleich groß ausgebildet. Sie können jedoch auch unterschiedlich groß ausgebildet werden und/oder mit einer unterschiedlichen Steigung auf der Leitung angeordnet sein. Die Variationsmöglichkeiten der Heizleiterbefestigung auf dem Leitungsverbinder sind gering, im Unterschied zur Medienleitung, da die Befestigung der Heizleiter auf den Leitungsverbindern festgelegt ist, zumeist dadurch auch deren Steigung. Eine Variationsmöglichkeit besteht daher durch Vorsehen einer separaten Heizlitze bzw. durch Anordnen von ein oder zwei Heizlitzen der Leitung auf dem Leitungsverbinder.

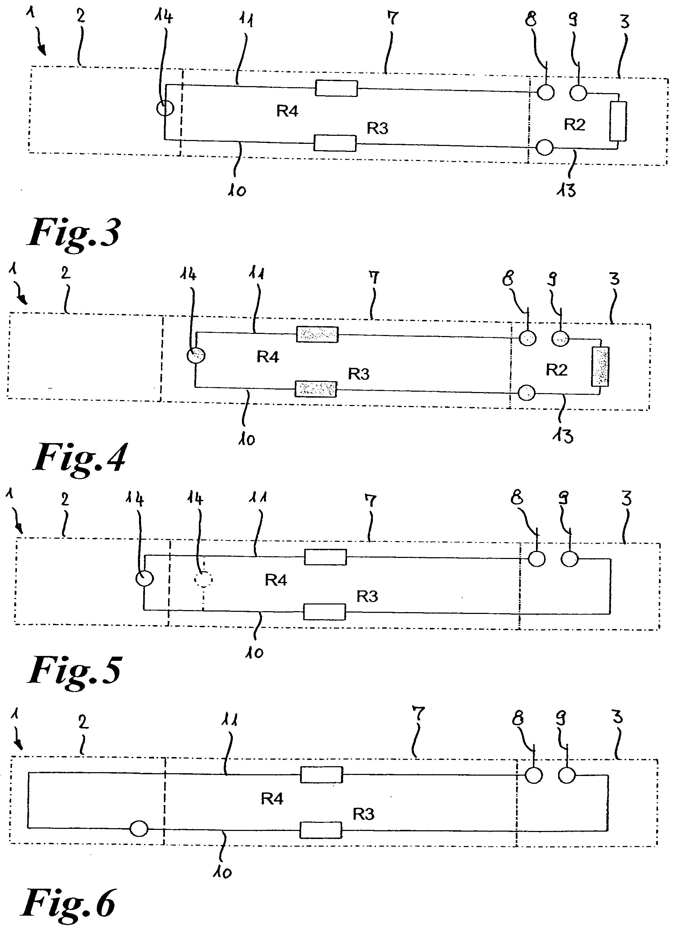

An die Heizlitze 11 und die Heizlitze 12 sind Kaltleiter 8, 9 angeschlossen. Unter einem Kaltleiter wird ein Leiter verstanden, der dem Heizleiteranschluss an eine Energieversorgung (Strom- oder Spannungsquellen) dient und nicht zum Beheizen vorgesehen ist. Üblicherweise weist daher ein Kaltleiter einen geringeren Widerstand als ein Heizleiter auf. Grundsätzlich ist es ebenfalls möglich, die beiden Kaltleiter 8, 9 an die Heizlitze 11 und die Heizlitze 13 anzuschließen. Ferner können auch die beiden Heizlitzen 12, 13 so ausgebildet werden, dass der Widerstand der Heizlitze 12 größer ist als der Widerstand der Heizlitze 13, wobei die Heizlitze mit dem geringeren Widerstand üblicherweise im Heißbereich vorgesehen ist und die Heizlitze mit dem vergleichsweise höheren Widerstand im Kaltbereich. Bei der in Figur 1 und 2 gezeigten Ausführungsvariante sind die beiden Kaltleiter 8, 9 beispielhaft aus dem Leitungsverbinder 2 herausgeführt gezeigt, bei den in den Figuren 3 bis 6 und 9 gezeigten Ausführungsvarianten beispielhaft aus dem Leitungsverbinder 3.

Figur 3 zeigt eine Ausführungsform der beheizbaren Medienleitung 1, bei der drei Heizlitzen vorgesehen sind. Die Heizlitze 12 ist im Vergleich zu der Ausführungsform gemäß Figur 2 entfallen und die beiden im Bereich des ersten Anschlussendes bzw. ersten Leitungsverbinders (Quick Connector) 2 angeordneten Enden der Heizlitzen 10, 11 sind miteinander verbunden, wie durch die Verbindungsstelle 14 in Figur 3 angedeutet. Das erste Anschlussende bzw. der erste Leitungsverbinder 2 ist auch bei dieser Ausführungsform im Heißbereich angeordnet, so dass der Widerstand R1 der Heizlitze 12 hier entfällt. Dies kann sich beispielsweise dann als sinnvoll erweisen, wenn unterschiedliche thermische Massen an den beiden Anschlussenden 2, 3, beispielsweise ein Aggregat mit einer hohen thermischen Masse an dem einen Ende, angeordnet sind. Der Leitungsverbinder 2 kann beispielsweise derart motornah angeordnet werden, dass die Beheizung durch die heiße Umgebung ausreicht, um das Medium in dem Leitungsverbinder bzw. in der Medienleitung an diesem Ende/in diesem Bereich aufzutauchen, da motornah das Abgas im Abgasstrang besonders heiß ist.

Figur 4 zeigt eine Ausführungsform der beheizbaren Medienleitung 1. Auch hierbei entfällt die Heizlitze 12, wobei die im Bereich des ersten Anschlussendes 2 der beheizbaren Medienleitung 1 an der Medienleitung 7 endenden Enden der Heizlitzen 10, 11 im Bereich der Medienleitung 7 miteinander verbunden sind. Es bleibt ein Teil der Medienleitung 7 dadurch unbeheizt, ebenso wie der erste Leitungsverbinder bzw. Anschlussende 2. Dies eignet sich besonders für den Fall, in dem die beheizbare Medienleitung 1 bereichsweise einer intensiven Wärmezufuhr aus der Umgebung ausgesetzt ist. Ein motornaher Bereich der Medienleitung 7 kann dabei dann ebenfalls unbeheizt bleiben. Sowohl bei der Ausführungsform gemäß Figur 3 als auch bei der Ausführungsform der beheizbaren Medienleitung gemäß Figur 4 sind die beiden Kaltleiter 8, 9 an der Heizlitze 11 und der Heizlitze 13 angegliedert.

Bei der Ausführungsformen der beheizbaren Medienleitung 1 gemäß Figur 5 und 6 sind jeweils nur zwei Heizlitzen 10, 11 vorgesehen. Die beiden Kaltleiter 8, 9 sind somit mit diesen beiden Heizlitzen 10, 11 verbunden, wobei die Anordnung der Kaltleiter 8, 9 in beiden Ausführungsformen im Bereich des zweiten Anschlussendes bzw. Leitungsverbinders 3 vorgesehen ist. In Figur 5 sind zwei verschiedene Ausführungsvarianten dargestellt, wobei die eine in gestrichelten Linien gezeigt ist. Der Unterschied zwischen diesen beiden Ausführungsvarianten besteht darin, dass die Verbindungsstelle 14 zwischen der Heizlitze 10 und 11 entweder, wie in Figur 3 gezeigt, im Bereich des ersten Anschlussendes bzw. Leitungsverbinders 2 vorgesehen ist oder, wie in Figur 4 gezeigt, entlang der Medienleitung 7. Die Verbindungsstelle 14 ist eine Crimpstelle, bei der es sinnvoll sein kann, diese nicht im Heißbereich anzuordnen, um diese vor zu großer Wärme zu schützen. Für eine dauerhaft dichte Crimpverbindung können temperaturfeste Materialien verwendet werden oder die Crimpverbindung kann wie erwähnt, in einem Temperaturbereich angeordnet werden, bei dem sie weiterhin dicht bleibt. In keinem der Fälle wird der erste Leitungsverbinder bzw. das erste Anschlussende 2 als Heißbereich beheizt.

Bei der gestrichelt dargestellten Variante des Anordnens der Verbindungsstelle 14 entlang der Medienleitung 7 bleibt ein Teil von dieser völlig unbeheizt. Bei der in durchgezogener Linie dargestellten Variante, bei der die Verbindungsstelle 14 auf oder an dem ersten Anschlussende bzw. Leitungsverbinder 2 angeordnet ist, ist zumindest dieser Teil des Leitungsverbinders bzw. Anschlussendes beheizt bzw. kann beheizt werden. Die Widerstände R3 und R4 der beiden Heizlitzen 10, 11 können unterschiedlich ausgebildet bzw. dimensioniert werden, so dass hierüber eine Varianz in der Leistungseinkopplung an den beiden Enden der beheizbaren Medienleitung möglich ist. Dasselbe gilt auch für die Ausführungsform der beheizbaren Medienleitung gemäß Figur 6 , wobei in der dargestellten Ausführungsform der Widerstand R4 der Heizlitze 11 kleiner als der Widerstand R3 der Heizlitze 10 ausgebildet ist und wobei sich die Heizlitze 11 im Heißbereich erstreckt, da sie an oder auf dem ersten Anschlussende bzw. Leitungsverbinder 2 angeordnet ist. Die Heizlitze 10 erstreckt sich über das zweite Anschlussende bzw. den zweiten Leitungsverbinder 3 hinweg. Es wird somit jeweils eine Heizlitze zum Umwickeln bzw. Anordnen auf oder an jeweils einem Anschlussende / Leitungsverbinder 2, 3 vorgesehen.

Bei der nicht erfindungsgemäßen Ausführungsform der beheizbaren Medienleitung 1 gemäß Figur 7 und 8 sind getrennte Stromkreise gebildet, wobei jeweils das erste Anschlussende bzw. der erste Leitungsverbinder 2 einen ersten Stromkreis 15, gebildet aus der Heizlitze 12, umfasst und der zweite Stromkreis 16 die beiden Heizlitzen 10, 11, die sich entlang zumindest eines Teils der Medienleitung 7 erstrecken und der Heizlitze 13, die sich an oder auf bzw. über das zweite Anschlussende bzw. den zweiten Leitungsverbinder 3 erstreckt. Entsprechend sind an beiden Stromkreisen Kaltleiter 8, 9 angeordnet, um eine Stromversorgung zu ermöglichen. Unter der Annahme, dass weiterhin das Anschlussende bzw. der Leitungsverbinder 2 im Heißbereich angeordnet ist, ist der Widerstand R1 kleiner als der Widerstand R2.

Dies kann jedoch auch umgekehrt der Fall sein, wobei durch das Vorsehen der unterschiedlichen Stromkreise die einzelnen Bereiche der beheizbaren Medienleitung unterschiedlich beheizt werden können, je nachdem, wie hoch der jeweilige Wärmebedarf an den Anschlussenden 2, 3 der beheizbaren Medienleitung 1 ist.

Bei der nicht erfindungsgemäßen Ausführungsform der beheizbaren Medienleitung gemäß Figur 8 besteht der Unterschied zu der Ausführungsform gemäß Figur 7 lediglich darin, dass die beiden Kaltleiter 8, 9 des ersten Stromkreises 15 auf die Seite des zweiten Anschlussendes 3 der beheizbaren Medienleitung herübergezogen sind, somit alle Kaltleiteranschlüsse sich auf einer Seite der beheizbaren Medienleitung befinden.

In Figur 9 ist eine weitere nicht erfindungsgemäße Ausführungsform der beheizbaren Medienleitung 1 gezeigt. Bei dieser Ausführungsvariante ist, im Unterschied zu der Ausführungsvariante gemäß Figur 2 , der Widerstand R1 der Heizlitze 12, die an, auf oder über dem Anschlussende 2 der beheizbaren Medienleitung 1 angeordnet ist, als PTC-Widerstand ausgebildet, wobei das erste Anschlussende 2 weiterhin im Heißbereich der beheizbaren Medienleitung vorgesehen ist. Es ist bei dieser Ausführungsvariante also eine Kombination von Heizlitzen bzw. Heizelementen mit unterschiedlichem Heizverhalten bzw. Temperaturverhalten vorgesehen. Dies kann sich beispielsweise dann als vorteilhaft erweisen, wenn ein selbstregelndes Verhalten beispielsweise zum Vermeiden einer Überhitzung vorgesehen werden soll.

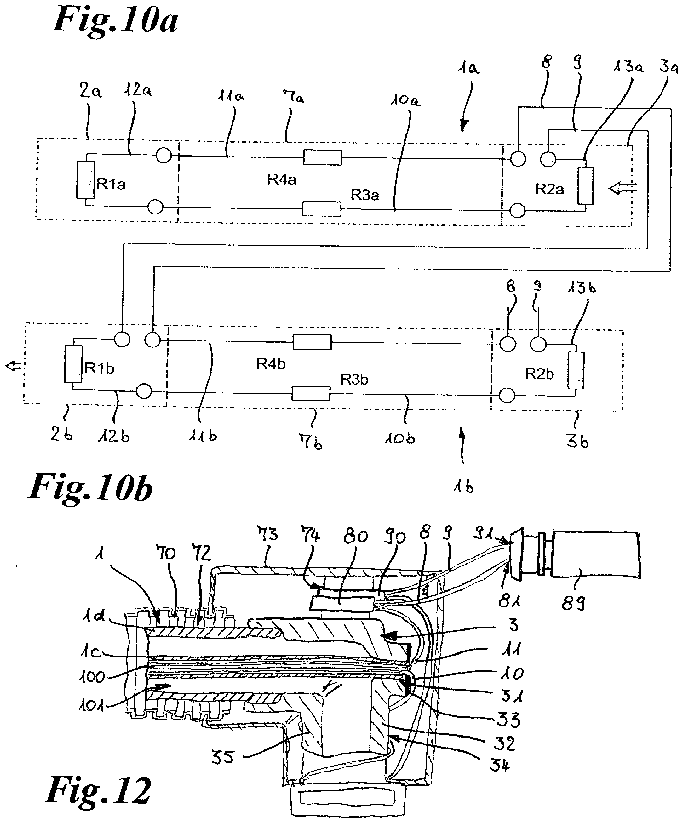

Die nicht erfindungsgemäßen Figuren 10a und 10b bilden eine Kombination aus zwei beheizbaren Medienleitungen gemäß Figur 1, wie beispielsweise in Figur 11 mit der Trennoder Verbindungsstelle 17 dargestellt, wobei quasi eine Leitung gebildet wird. Wie erwähnt, kann bei der Anordnung nach Figur 11 auch lediglich eine Medienleitung vorgesehen werden. Die beiden Leitungen sind über die Kaltleiter 8, 9 miteinander verbunden, wobei die erste beheizbare Medienleitung 1a im Bereich des zweiten Anschlussendes bzw. Leitungsverbinders 3a mit Anschlüssen an die beiden Kaltleiter 8, 9 versehen ist und sich die beiden Kaltleiter 8, 9 zu dem ersten Anschlussende 2b der zweiten beheizbaren Medienleitung 1 b erstrecken und dort an die Heizlitzen 12b und 11b angeschlossen sind. Die zweite beheizbare Medienleitung 1 b weist zusätzlich zum Anschluss an eine Stromversorgung im Bereich ihres zweiten Anschlussendes 3b zwei weitere Kaltleiter 8, 9 auf. Bei dieser Ausführungsvariante einer Kombination zweier beheizbarer Medienleitungen zu im Prinzip einer ist lediglich der Bereich des ersten Anschlussendes 2a der ersten beheizbaren Medienleitung 1a als Heißbereich ausgebildet, somit die Heizlitze 12a dort bezüglich ihres Widerstandes R1a entsprechend ausgelegt. Die weiteren Widerstände R2a, R1b und R2b des zweiten Anschlussendes 3a der ersten beheizbaren Medienleitung 1 a und des ersten und zweiten Anschlussendes 2b, 3b der zweiten beheizbaren Medienleitung 1 b liegen jeweils in einem Kaltbereich. Entsprechend sind die Widerstände R2a, R1b, R2b der entsprechenden Heizlitzen 12b und 13a, 13b größer als der Widerstand R1a der Heizlitze 12a der ersten beheizbaren Medienleitung 1a. Entlang den beiden Medienleitungen 7a, 7b erstrecken sich die Heizlitzen 10a, 10b, 11 a, 11 b.

Wie in Figur 1 an den beiden Anschlussenden 2, 3 angedeutet, sind diese mit außenseitigen Isoliereinrichtungen 20, 30, die zugleich auch eine Schutzfunktion ausüben, versehen. Sofern das Erfordernis einer unterschiedlichen Wärmeabfuhr besteht, können die Isoliereinrichtungen 20, 30 unterschiedlich ausgebildet werden, insbesondere unterschiedliche Isoliereigenschaften aufweisen. Dies kann durch Variation der Materialwahl ebenso wie durch Variation der Ausgestaltung der beiden Isoliereinrichtungen vorgesehen werden. Ferner ist es grundsätzlich möglich, derartige Isoliereinrichtungen einseitig oder beidseitig entfallen zu lassen und beispielsweise lediglich eine Schutzhülle als Schutz gegen Beschädigung dort vorzusehen. Eine solche Schutzfunktion, aber auch eine Isolierfunktion übt das die Medienleitung außenseitig umgebende Hüllrohr, beispielsweise das Wellrohr 70 aus. Der Aufbau der Leitung beinhaltet somit ein Umwickeln der Medienleitung 7 mit Heizlitzen 10, 11, ein Umwickeln mit einem Tapeband 71 bzw. Klebe-, Gewebe- oder Gewebeklebeband und ein Umgehen mit dem Hüllrohr 70 unter Belassen eines isolierenden Luftspalts 72 zwischen der umwickelten Medienleitung und dem Hüllrohr.

Die beiden Anschlussenden bzw. Leitungsverbinder 2, 3 können aus unterschiedlichen Materialien bestehen. Beispielsweise kann für den einen Leitungsverbinder ein leitfähigeres Material verwendet werden als für den anderen, beispielsweise als leitfähigeres Material ein Metall und/oder leitfähiger Kunststoff und als weniger leitfähiges Material ein Standard-Kunststoff. Durch eine solche Variation der Leitungsverbinder kann eine bessere Temperaturverteilung vorgesehen werden, insbesondere eine Wärmeabfuhr in an die beheizbare Medienleitung angeschlossene Komponenten. Eine Variationsmöglichkeit besteht darin, ein Kupplungsteil einerseits und einen Steckverbinder andererseits als Anschlussenden der beheizbaren Medienleitung vorzusehen. Auch ein Vermeiden von sogenannten Hotspots ist hierüber möglich.

Ferner ist ein Wärmeeintrag zumindest in einen Teilbereich des Leitungsverbinders bzw. Anschlussendes möglich, beispielsweise ein radialer Wärmeübergang von der Medienleitung in zumindest einen der Leitungsverbinder. Dies eignet sich insbesondere dann, wenn aus Platzgründen an dem Leitungsverbinder keine zusätzliche Heiztechnik angeordnet bzw. in diesen integriert werden kann. Als Material für einen solchen Leitungsverbinder bzw. insbesondere den wärmeleitfähigen Teil eines solchen Leitungsverbinders eignet sich ein Material mit einer Wärmeleitfähigkeit von 1 bis 20 W/(m•K) insbesondere 1 bis 7 W/(m•K). Ferner erweist es sich als vorteilhaft, ein Material zu verwenden, das eine Bruchdehnung von 1 bis 10 %, insbesondere eine Bruchdehnung von etwa 2 % aufweist. Eine hohe Wärmeleitfähigkeit wird durch einen möglichst hohen Füllstoffanteil erzielt, der jedoch die mechanischen Eigenschaften, insbesondere von Kunststoff, stark verschlechtert, so dass Kunststoff sehr spröde wird und seine Festigkeit abnimmt. Daher wird ein guter Kompromiss zwischen der gewünschten hohen Wärmeleitfähigkeit und guten mechanischen Eigenschaften ausgewählt. Als Füllstoff eignen sich vor allem mineralische Füllstoffe, wie Langglasfasern oder Kurzglasfasern. Beispielsweise kann ein Polymer PA66 mit Langglasfasern als Füllstoff verwendet werden, das eine Zugfestigkeit von etwa 145 MPa und eine Bruchdehnung von 2 % aufweist, wie bspw. Star-Therm<^{®}>WG A-2 der Firma EPIC Polymers Ltd., Kaiserslautern. Ebenfalls eignet sich, da sehr gut leitend, ein Polymer PA 66 mit Kurzglasfasern als Füllstoff auf Kohlenstoffbasis (Graphite) mit einer Zugfestigkeit von 60 MPa und einer Bruchdehnung von 0,9 %, bspw. das Produkt Alcom PA66 910/30.1 GF15 TCE5 der Firma ALBIS Plastic GmbH. Auch andere wärmeleitfähige Materialien eignen sich zur Herstellung des Leitungsverbinders, insbesondere auch Materialkombinationen.

Wie in Figur 11 angedeutet, kann zumindest eine Trenn- bzw. Verbindungsstelle 17 entlang der beheizbaren Medienleitung vorgesehen werden. Die Medienleitung kann dadurch zweiteilig aufgebaut werden, wie in den Figuren 10a und 10b bereits angedeutet. Außer dem Vorsehen einer Zweiteilung der beheizbaren Medienleitung kann auch eine Mehrteilung, beispielsweise eine Dreiteilung vorgesehen werden. Bei letzterer wären zwei Trenn- bzw. Verbindungsstellen bzw. eine erste, eine zweite und eine dritte beheizbare Medienleitung vorgesehen, die miteinander verbunden oder gekoppelt werden. Da sich im Zuge von Systemvereinfachungen die Dosierstelle mit dem Dosiermodul 5 immer weiter in Richtung des Motorblocks verschiebt, erweist sich eine solche Trennung der beheizbaren Medienleitung in zwei aneinander gekoppelte Leitungen als vorteilhaft, da jeweils eine Beheizung bzw. Heiztechnik nahe an der zu beheizenden Stelle im Bereich der an die beheizbare Medienleitung angeschlossenen Komponenten vorgesehen werden kann. In der in Figur 11 gezeigten Ausführungsvariante ist eine solche Heiztechnik für die Medienleitung und den Leitungsverbinder 2 im Bereich des Tanks 4 vorgesehen. Die Trennstelle 17 kann beispielsweise durch Kupplungsteile ausgebildet werden, die endseitig an den beiden Teilen der beheizbaren Medienleitung angeordnet sind und zusammengesteckt werden können. Ferner erleichtert eine solche Teilbarkeit der beheizbaren Medienleitung, also das Vorsehen einer Trenn- bzw. Kupplungsstelle 17 die Montage der beheizbaren Medienleitung im Fahrzeug.

In Figur 12 ist eine weitere nicht erfindungsgemäße Ausführungsform der beheizbaren Medienleitung 1 und des an dieser angefügten Leitungsverbinders 3, hier in Form eines Winkelverbinders gezeigt. Die beheizbare Medienleitung 1 umfasst hier zwei ineinander angeordnete Medienleitungen, eine innere Medienleitung 1c und eine äußere Medienleitung 1d. Die innere Medienleitung 1c weist in ihrem inneren Lumen 100 die beiden Heizlitzen 10, 11 auf, ist also hierüber innenbeheizbar. Durch den Zwischenraum 101 zwischen der inneren Medienleitung 1 c und der äußeren Medienleitung 1d kann zu beheizendes Medium strömen. Die äußere Medienleitung 1d ist mit dem Leitungsverbinder 3 gefügt. Die innere Medienleitung 1c ist durch eine Öffnung 31 in der Wandung 32 des Leitungsverbinders 3 herausgeführt. Um die Durchtrittsstelle durch die Wandung 32 nach außen abzudichten, um zu verhindern, dass Medium dort aus dem Zwischenraum 101 nach außen dringt, ist ein Verschlusselement 33 dort auf der Außenseite 34 der Wandung 32 angeordnet. Außenseitig die äußere Medienleitung außerhalb des Leitungsverbinders 3 umgebend ist das Hüll- oder Wellrohr 70 angeordnet, unter Belassen des isolierenden Luftspalts 72 zwischen der äußeren Medienleitung 1d und dem Hüllrohr 70. Zur weiteren Isolation auch des Leitungsverbinders 3 ist diesen und ein Ende des Hüllrohres umgebend eine außenseitige Isolations- oder Schutzkappe 73 vorgesehen.

Neben der Wärmeleitfähigkeit des Leitungsverbinders kann es im Heißbereich auch auf eine besondere Temperaturfestigkeit ankommen. Vorteilhaft kann für den im Heißbereich angeordneten Leitungsverbinder 2 ein im Vergleich zu dem für den anderen Leitungsverbinder 3 verwendeten Material temperaturbeständigeres Material verwendet werden, beispielsweise ein temperaturbeständiges Kunststoffmaterial, insbesondere Polymer, wie ein PPA (Polyphthalamid). Als weiter vorteilhaft erweist es sich, wenn auch die Medienleitung 7 in diesem Bereich aus einem temperaturbeständigeren Material besteht. Hierbei eignet sich das Vorsehen einer zweigeteilten Leitung, wie in den Figuren 10a und 10b bzw. 11 gezeigt. Der Leitungsverbinder bzw. Quick Connector 2 und ein Teil der Medienleitung 7 können somit z.B. aus PPA bestehen und die restliche Medienleitung ebenso wie der Leitungsverbinder 3, der im Kaltbereich angeordnet und als Steckverbinder ausgebildet sein kann, z.B. aus einem Polyamid 12. Der Leitungsverbinder kann auch aus PA12 GF30 bestehen, oder einem Polyamid 6. Bei Verwendung einer schlauchförmigen Medienleitung kann dieser im Heißbereich aus EPDM (Ethylen-Propylen-Dien-Monomer) bestehen, in Kombination mit einem Leitungsverbinder aus PPA.

Der aus einem temperaturbeständigen Material, wie PPA, bestehende Teil der Medienleitung kann z.B. in einem Gewebetape 71 und einem Hüll- oder Wellrohr 70 aus temperaturbeständigem TPC (Thermoplastischen Polyesterelastomer) bestehen, die Crimpverbindung in diesem Bereich z.B. aus der Legierung K-75 und ein Schrumpfschlauch aus FEP (Perfluoretylenpropylen). Die übrige Medienleitung (im Kaltbereich) aus PA 12 kann mit einem Standardtape 71 umwickelt und von einem Hüll- bzw. Wellrohr 70 aus modifiziertem Polypropylen (PPMod) umgeben sein. Die Crimpverbindung in diesem Bereich kann aus CuZn30 und ein Schrumpfschlauch aus XPE (strahlenvernetzes Polyethylen) bestehen.

PPA eignet sich besonders für höhere Temperaturen und weist ein sehr gutes Permeationsverhalten auf, ist also kaum durchlässig für aggressive durch die beheizbare Medienleitung strömende Medien.

### Bezugszeichenliste

- 1: beheizbare Medienleitung
- 1a: erste beheizbare Medienleitung
- 1b: zweite beheizbare Medienleitung
- 1c: innere Medienleitung
- 1d: äußere Medienleitung
- 2: erstes Anschlussende/erster Leitungsverbinder
- 2a: erstes Anschlussende/erster Leitungsverbinder von 1 a
- 2b: erstes Anschlussende/erster Leitungsverbinder von 1 b
- 3: zweites Anschlussende/zweiter Leitungsverbinder
- 3a: zweites Anschlussende/zweiter Leitungsverbinder von 1a
- 3b: zweites Anschlussende/zweiter Leitungsverbinder von 1 b
- 4: Tank
- 5: Dosiermodul
- 6: Einspritzeinrichtung
- 7: Medienleitung
- 7a: Medienleitung
- 7b: Medienleitung
- 8: Kaltleiter
- 9: Kaltleiter
- 10: erste Heizlitze / erstes Heizelement
- 10a: erste Heizlitze / erstes Heizelement
- 10b: erste Heizlitze / erstes Heizelement
- 11: zweite Heizlitze / zweites Heizelement
- 11a: zweite Heizlitze / zweites Heizelement
- 11b: zweite Heizlitze / zweites Heizelement
- 12: dritte Heizlitze / drittes Heizelement
- 12a: dritte Heizlitze / drittes Heizelement
- 12b: dritte Heizlitze / drittes Heizelement
- 13: vierte Heizlitze / viertes Heizelement
- 13a: vierte Heizlitze / viertes Heizelement
- 13b: vierte Heizlitze / viertes Heizelement
- 14: Verbindungsstelle
- 15: erster Stromkreis
- 16: zweiter Stromkreis
- 17: Trennstelle/Verbindungsstelle
- 20: Isoliereinrichtung
- 30: Isoliereinrichtung
- 31: Öffnung
- 32: Wandung
- 33: Verschlusselement
- 34: Außenseite
- 35: abgewinkelter Anschlussstutzen
- 60: Abgasstrang
- 61: Motor
- 70: Wellrohr
- 71: Tapeband
- 72: Luftspalt
- 73: Schutzkappe
- 74: Aufnahme
- 80: Verbindungsstelle
- 81: Ende
- 89: Stecker
- 90: Verbindungsstelle
- 91: Ende
- 100: inneres Lumen von 1 c
- 101: Zwischenraum zwischen 1 c und 1 d

## Patentansprüche

1. Beheizbare Medienleitung (1,1a,1b,1c,1d) mit zumindest einer Medienleitung (7,7a,7b) mit zwei Leitungsverbindern (2,2a,2b,3,3a,3b) und zwei oder drei elektrischen Heizlitzen (10,10a,10b,11,11a,11b,13, 13a, 13b), wobei sich eine erste und eine zweite Heizlitze (10,10a,10b,11,11a,11b) entlang der Medienleitung (7) erstrecken, wobei zumindest ein Mittel vorgesehen ist, mittels dessen an den beiden Leitungsverbindern (2,2a,2b,3,3a,3b) der beheizbaren Medienleitung ein differenzierter Wärmeeintrag ermöglicht wird oder vorgesehen ist, wobei als Mittel eine unterschiedliche Leistungseinkopplung an den beiden Leitungsverbindern (2,2a,2b,3,3a,3b) vorgesehen ist,
wobei
eine unterschiedliche Anordnung der Heizlitzen
(10,10a,10b,11,11a,11b, 13, 13a, 13b) an den beiden Leitungsverbindern (2,2a,2b,3,3a,3b) vorgesehen ist und die Heizlitzen in Bereichen der beiden Leitungsverbinder einen unterschiedlichen Widerstand aufweisen, wobei ein Ende der ersten Heizlitze (10) und ein Ende der zweiten Heizlitze (11) an einer Verbindungsstelle (14) direkt miteinander verbunden sind, wobei die Verbindungsstelle (14) auf oder an dem ersten Leitungsverbinder (2) oder entlang der Medienleitung (7) angeordnet ist, und wobei eine der beiden ersten und zweiten Heizlitzen (10, 11) oder die dritte Heizlitze (13,13a,13b) an oder auf dem zweiten Leitungsverbinder (3) angeordnet ist, wobei die dritte Heizlitze mit den beiden anderen Heizlitzen verbunden ist.

2. Beheizbare Medienleitung (1,1a,1b,1c,1d) nach Anspruch 1,
**dadurch gekennzeichnet, dass**
eine unterschiedliche Anzahl von Wicklungen an den beiden Leitungsverbindern (2,2a,2b,3,3a,3b) vorgesehen ist.

3. Beheizbare Medienleitung (1,1a,1b,1c,1d) nach Anspruch 1,
**dadurch gekennzeichnet, dass**
unterschiedliche Heizlitzen (10,10a,10b,11,11a,11b,12,12a,12b,13,13a,13b) an den beiden Leitungsverbindern (2,2a,2b,3,3a,3b) vorgesehen sind. und/oder an einem Leitungsverbinder (2,2a,2b) eine Heizlitze (11,11a,11b) mit einem niedrigeren Widerstand als an dem anderen Leitungsverbinder (3,3a,3b) vorgesehen ist.

4. Beheizbare Medienleitung (1,1a,1b,1c,1d) nach einem der Ansprüche 1 bis 3,
**dadurch gekennzeichnet, dass**
zwei Heizlitzen (10,10a,10b,11,11a,11b) vorgesehen sind, wobei eine oder beide Heizlitzen an oder auf nur einem Leitungsverbinder (2,2a,2b,3,3a,3b) angeordnet ist.

5. Beheizbare Medienleitung (1,1a, 1b,1c,1d) nach einem der Ansprüche 1 bis 3,
**dadurch gekennzeichnet, dass**
drei Heizlitzen (10,10a,10b,11,11a,11b,12,12a,12b,13,13a,13b) vorgesehen sind, wobei nur an oder auf einem Leitungsverbinder (2,2a,2b,3,3a,3b) zumindest eine der Heizlitzen angeordnet ist.

6. Beheizbare Medienleitung (1,1a,1b,1c,1d) nach Anspruch 3,
**dadurch gekennzeichnet, dass**
zwei Heizlitzen (10,10a,10b,11,11a,11b) vorgesehen sind, wobei jeweils eine Heizlitze an oder auf nur einem Leitungsverbinder (2,2a,2b,3,3a,3b) angeordnet ist.

7. Beheizbare Medienleitung (1,1a,1b,1c,1d) nach einem der vorstehenden Ansprüche,
**dadurch gekennzeichnet, dass**
die beiden Leitungsverbinder (2,2a,2b,3,3a,3b) unterschiedlich thermisch leitfähig ausgebildet sind.

8. Beheizbare Medienleitung (1,1a,1b,1c,1d) nach einem der vorstehenden Ansprüche,
**dadurch gekennzeichnet, dass**
Heizlitzen (10,10a,10b,11,11a,11b,12,12a,12b,13,13a,13b) mit einem unterschiedlichen Heizverhalten miteinander kombinierbar sind oder kombiniert werden.

9. Beheizbare Medienleitung (1,1a,1b,1c,1d) nach einem der vorstehenden Ansprüche,
**dadurch gekennzeichnet, dass**
zur unterschiedlichen Wärmeabfuhr an den Leitungsverbindern (2,2a,2b,3,3a,3b) der Medienleitung (7,7a,7b) Einrichtungen (20,30) vorgesehen sind, die unterschiedliche Isolationseigenschaften aufweisen.

10. Beheizbare Medienleitung (1,1a,1b,1c,1d) nach einem der vorstehenden Ansprüche,
**dadurch gekennzeichnet, dass**
die beheizbare-Medienleitung (1) zumindest zwei ineinander angeordnete Medienleitungen (1c,1d) umfasst, wobei eine innere Medienleitung (1c) innenbeheizbar ist und in dem Zwischenraum (101) zwischen der zumindest einen inneren Medienleitung (1c) und einer äußeren Medienleitung (1d) beheizbares Medium strömbar ist oder strömt.

## Claims

1. A heatable media line (1, 1a, 1b, 1c, 1d) having at least one media line (7, 7a, 7b) with two line connectors (2, 2a, 2b, 3, 3a, 3b) and two or three electric heating wires (10, 10a, 10b, 11, 11a, 11b, 13, 13a, 13b), wherein a first and a second heating wire (10, 10a, 10b, 11, 11a, 11b) extend along the media line (7), wherein at least one means is provided by which a differentiated heat input is enabled or is provided at the two line connectors (2, 2a, 2b, 3, 3a, 3b) of the heatable media line, wherein a different power coupling is provided as the means at the two line connectors (2, 2a, 2b, 3, 3a, 3b),
wherein
a different arrangement of the heating wires (10, 10a, 10b, 11, 11a, 11b, 13, 13a, 13b) is provided at the two line connectors (2, 2a, 2b, 3, 3a, 3b) and the heating wires have a different resistance in regions of the two line connectors, wherein one end of the first heating wire (10) and one end of the second heating wire (11) are connected directly to one another at a connecting point (14), wherein the connecting point (14) is arranged on or at the first line connector (2) or along the media line (7), and wherein one of the two first and second heating wires (10, 11) or the third heating wire (13, 13a, 13b) is arranged at or on the second line connector (3), wherein the third heating wire is connected to the other two heating wires.

2. The heatable media line (1, 1a, 1b, 1c, 1d) according to claim 1,
**characterised in that**
a different number of windings is provided at the two line connectors (2, 2a, 2b, 3, 3a, 3b).

3. The heatable media line (1, 1a, 1b, 1c, 1d) according to claim 1,
**characterised in that**
different heating wires (10, 10a, 10b, 11, 11a, 11b, 12, 12a, 12b, 13, 13a, 13b) are provided at the two line connectors (2, 2a, 2b, 3, 3a, 3b). and/or, at one line connector (2, 2a, 2b), a heating wire (11, 11a, 11b) is provided with a lower resistance than at the other line connector (3, 3a, 3b).

4. The heatable media line (1, 1a, 1b, 1c, 1d) according to one of claims 1 to 3,
**characterised in that**
two heating wires (10, 10a, 10b, 11, 11a, 11b) are provided, wherein one or both heating wires is arranged at or on only one line connector (2, 2a, 2b, 3, 3a, 3b).

5. The heatable media line (1, 1a, 1b, 1c, 1d) according to one of claims 1 to 3,
**characterised in that**
three heating wires (10, 10a, 10b, 11, 11a, 11b, 12, 12a, 12b, 13, 13a, 13b) are provided, wherein at least one of the heating wires is only arranged at or on one line connector (2, 2a, 2b, 3, 3a, 3b).

6. The heatable media line (1, 1a, 1b, 1c, 1d) according to claim 3,
**characterised in that**
two heating wires (10, 10a, 10b, 11, 11a, 11b) are provided, wherein one heating wire in each case is arranged at or on only one line connector (2, 2a, 2b, 3, 3a, 3b).

7. The heatable media line (1, 1a, 1b, 1c, 1d) according to one of the preceding claims,
**characterised in that**
the two line connectors (2, 2a, 2b, 3, 3a, 3b) are designed to have different thermal conductivities.

8. The heatable media line (1, 1a, 1b, 1c, 1d) according to one of the preceding claims,
**characterised in that**
heating wires (10, 10a, 10b, 11, 11a, 11b, 12, 12a, 12b, 13, 13a, 13b) with a different heating behaviour can be combined with one another or are combined with one another.

9. The heatable media line (1, 1a, 1b, 1c, 1d) according to one of the preceding claims,
**characterised in that**
devices (20, 30) which have different insulating properties are provided for different heat dissipation at the line connectors (2, 2a, 2b, 3, 3a, 3b) of the media line (7, 7a, 7b).

10. The heatable media line (1, 1a, 1b, 1c, 1d) according to one of the preceding claims,
**characterised in that**
the heatable media line (1) comprises at least two media lines (1c, 1d) arranged one inside the other, wherein an inner media line (1c) can be heated internally and a heatable medium can flow or flows in the clearance (101) between the at least one inner media line (1c) and an outer media line (1d).

## Revendications

1. Conduite de fluide (1, 1a, 1b, 1c, 1d) pouvant être chauffée comprenant au moins une conduite de milieu (7, 7a, 7b) pourvue de deux conducteurs (2, 2a, 2b, 3, 3a, 3b) et deux ou trois torons de chauffage (10, 10a, 10b, 11, 11a, 11b, 13, 13a, 13b), dans laquelle un premier et un deuxième toron de chauffage (10, 10a, 10b, 11, 11a, 11b) s'étendent le long de la conduite de milieu (7), dans laquelle au moins un moyen est prévu, au moyen duquel un apport de chaleur différencié est possible ou est prévu au niveau des deux connecteurs (2, 2a, 2b, 3, 3a, 3b) de la conduite de milieu pouvant être chauffée, dans laquelle est prévu, en tant que moyen, un couplage de conduites différent au niveau des deux connecteurs (2, 2a, 2b, 3, 3a, 3b),
dans laquelle
un ensemble différent des torons de chauffage (10, 10a, 10b, 11, 11a, 11b, 13, 13a, 13b) est prévu au niveau des deux connecteurs (2, 2a, 2b, 3, 3a, 3b) et les torons de chauffage présentent des résistances différentes dans les zones des deux connecteurs, dans laquelle une extrémité du premier toron de chauffage (10) et une extrémité du deuxième toron de chauffage (11) sont reliées directement l'une à l'autre au niveau d'un point de liaison (14), dans laquelle le point de liaison (14) est disposé sur ou au niveau du premier connecteur (2) ou le long de la conduite de milieu (7), et dans laquelle un des deux premier et deuxième torons de chauffage (10, 11) ou le troisième toron de chauffage (13, 13a, 13b) est disposé au niveau du ou sur le deuxième connecteur (3), dans laquelle le troisième toron de chauffage est relié aux deux autres torons de chauffage.

2. Conduite de milieu (1, 1a, 1b, 1c, 1d) pouvant être chauffée selon la revendication 1,
**caractérisée en ce**
**qu'**un nombre différent d'enroulements est prévu au niveau des deux connecteurs (2, 2a, 2b, 3, 3a, 3b).

3. Conduite de milieu (1, 1a, 1b, 1c, 1d) pouvant être chauffée selon la revendication 1,
**caractérisée en ce**
**que** différents torons de chauffage (10, 10a, 10b, 11, 11a, 11b, 13, 13a, 13b) sont prévus au niveau des connecteurs (2, 2a, 2b, 3, 3a, 3b), et/ou **en ce qu'**est prévu, au niveau d'un connecteur (2, 2a, 2b), un toron de chauffage (11, 11a, 11b) présentant une résistance plus faible qu'au niveau de l'autre connecteur (3, 3a, 3b).

4. Conduite de milieu (1, 1a, 1b, 1c, 1d) pouvant être chauffée selon l'une quelconque des revendications 1 à 3,
**caractérisée en ce**
**que** deux torons de chauffage (10, 10a, 10b, 11, 11a, 11b) sont prévus, dans laquelle un ou deux torons de chauffage sont disposés au niveau seulement d'un connecteur (2, 2a, 2b, 3, 3a, 3b) ou sur seulement un connecteur.

5. Conduite de milieu (1, 1a, 1b, 1c, 1d) pouvant être chauffée selon l'une quelconque des revendications 1 à 3,
**caractérisée en ce**
**que** trois torons de chauffage (10, 10a, 10b, 11, 11a, 11b, 13, 13a, 13b) sont prévus, dans laquelle au moins un des torons de chauffage est disposé seulement au niveau d'un connecteur (2, 2a, 2b, 3, 3a, 3b) ou seulement sur un connecteur.

6. Conduite de milieu (1, 1a, 1b, 1c, 1d) pouvant être chauffée selon la revendication 3,
**caractérisée en ce**
**que** deux torons de chauffage (10, 10a, 10b, 11, 11a, 11b) sont prévus, dans laquelle respectivement un toron de chauffage est disposé au niveau de seulement un connecteur (2, 2a, 2b, 3, 3a, 3b) ou sur seulement un connecteur.

7. Conduite de milieu (1, 1a, 1b, 1c, 1d) pouvant être chauffée selon l'une quelconque des revendications précédentes,
**caractérisée en ce**
**que** les deux connecteurs (2, 2a, 2b, 3, 3a, 3b) sont réalisés avec une thermoconductivité différente.

8. Conduite de milieu (1, 1a, 1b, 1c, 1d) pouvant être chauffée selon l'une quelconque des revendications précédentes,
**caractérisée en ce**
**que** des torons de chauffage (10, 10a, 10b, 11, 11a, 11b, 13, 13a, 13b) présentant un comportement de chauffage différent peuvent être combinés ou sont combinés les uns aux autres.

9. Conduite de milieu (1, 1a, 1b, 1c, 1d) pouvant être chauffée selon l'une quelconque des revendications précédentes,
**caractérisée en ce**
**que** sont prévus, aux fins de l'évacuation différente de chaleur, au niveau des connecteurs (2, 2a, 2b, 3, 3a, 3b) de la conduite de milieu (7, 7a, 7b), des dispositifs (20, 30), qui présentent des propriétés d'isolation différentes.

10. Conduite de milieu (1, 1a, 1b, 1c, 1d) pouvant être chauffée selon l'une quelconque des revendications précédentes,
**caractérisée en ce**
**que** la conduite de milieu (1) pouvant être chauffée comprend au moins deux conduites de milieu (1c, 1d) disposées l'une dans l'autre, dans laquelle une conduite de milieu (1c) intérieure peut être chauffée à l'intérieur et un milieu pouvant être chauffé peut circuler ou circule dans l'espace intermédiaire (101) entre l'au moins une conduite de milieu (1c) intérieure et une conduite de milieu (1d) extérieure.
